# EUROPEAN PATENT SPECIFICATION

(11) **EP 0 958 407 B1**
(45) Date of publication and mention of the grant of the patent: **26.09.2001**
(21) Application number: 98901128.3
(22) Date of filing: 23.01.1998
(51) Int. Cl.: C25B 9/00, C25B 1/26, C01B 11/02

(54) **PROCESS AND APPARATUS FOR THE ELECTROLYTIC PRODUCTION OF CHLORINE AND USE THEREOF**
VERFAHREN UND VORRICHTUNG ZUR ELEKTROLYTISCHEN HERSTELLUNG VON CHLOR UND DEREN VERWENDUNG
PROCEDE ET APPAREIL POUR LA PRODUCTION ELECTROLYTIQUE DE CHLORE ET LEUR UTILISATION

(30) Priority: 24.01.1997 NL 1005081
(43) Date of publication of application: 24.11.1999
(73) Proprietor: Zilvold-Tieleman Hydrotechniek B.V., 6983 BM Doesburg (NL)
(72) Inventor: ZILVOLD, Hendrik, Martin, NL-8084 EN 'T Harde (NL)
(74) Representative: Van kan, Johan Joseph Hubert, Ir.
(86) International application number: NL9800047
(87) International publication number: WO9832900

(56) References cited:
- EP-A- 0 427 340
- CH-A- 671 966
- DE-A- 3 603 254
- DE-B- 1 173 069
- FR-A- 2 382 519
- US-A- 4 250 144
- PATENT ABSTRACTS OF JAPAN vol. 013, no. 061 (C-567), 10 February 1989 & JP 63 253007 A (OSAKA SODA CO LTD), 20 October 1988,

## Description

The present invention relates to a device for carrying out the electrolysis of a chloride, wherein several electrolytic cells are connected electrically in series, which cells consist of a cell element, a bipolar electrode and a diaphragm or a semi-permeable membrane, wherein said cells are surrounded by an encasing comprising two end plates, and wherein a liquid jacket is present between the encasing and the outside of the cell frames, which jacket is provided with an inlet and an outlet for said liquid. The present invention furthermore relates to a cell element for use in such a device for carrying out an electrolytic process and to a method for carrying out an electrolytic process in such an electrolysis device. In addition to that the present invention relates to the use of the chlorine gas obtained in accordance with the present invention as well as to a reactor therefore and to an installation for preparing chlorine dioxide.

Such a method for carrying out the electrolysis of a chloride is known from European patent No. 0 427 340. According to said European patent a liquid jacket is provided within the encasing of the series-connected electrolytic cells, round the system of the cell frames comprising bipolar electrodes and separators or degassing tubes, which liquid is preferably water. Such a liquid jacket functions to allow possible leakage from the electrolytic cells, because the liquid that may leak out will be caught in the water jacket, which is refreshed periodically or continuously, and which may subsequently be used specifically as a catholyte. A small amount of in-leakage is acceptable thereby. In addition to that a separation of an electrolyte and the gas that has developed takes place in the degassing tubes, so that hydrogen and chlorine gas can readily be recovered from said degassing tubes. A problem with such electrolytic apparatus, which comprises several series-connected bipolar electrodes, is that a great deal of attention must be paid to the proper sealing of the cells, so that no leakage of the electrolyte from the electrolytic cell will occur. Although it is not necessary with the construction described in the aforesaid European patent to pay special attention to the packing material and to the stresses which are necessary thereby, which stresses are exerted on the cell frames in which the bipolar electrodes are placed, there is still a small amount of leakage at the degassing tubes in practice. In addition to being toxic, the chemical substances produced during the electrolysis are also highly corrosive, so that the materials to be used need to meet certain requirements. Moreover, the use of such degassing tubes requires precise fitting in the end plates.

The object of the invention is therefore to provide a device for carrying out an electrolytic process, wherein the occurrence of leakage of the electrolyte from the electrolytic cell is prevented. In addition to that it is desirable to develop an electrolysis device which does not require the use of separate degassing tubes.

According to the present invention the device referred to in the introduction is characterized in that the cathode space is in direct communication with the catholyte space, which catholyte space also functions as an outlet for hydrogen gas, and that the anode space is in direct communication with the anolyte space, which anolyte space functions as an outlet for chlorine gas, whereby there is no communication between the catholyte space and the anolyte space.

Although German Offenlegungsschrift No. 36 03 254 discloses a cell frame which is composed of a cathode gas part and an anode gas part, which parts are in communication with the electrolytic cell part via a communication opening, there is still a risk of leakage with such an electrolytic cell unit. The leakage problems are caused by the fact that the cell frames are connected into a block by using draw rods. The individual cell frames are therefore provided with a sealing material, preferably polyfluoroethylene. This is a construction which is known per se, and which is frequently used for filter pressing. With the lapse of time the poor sealing along the circumference of the individual cell frames will lead to loss of process liquids and gases. In addition, the device is only suitable for the electrolysis of water, wherein oxygen and hydrogen are produced.

The present invention, on the other hand, is suitable for carrying out the electrolysis of a chloride compound, wherein the corrosive chlorine gas and the explosive hydrogen gas are formed. The special medium to be subjected to electrolysis makes it necessary to pay a great deal of attention to keeping the process liquids and gas within the present device. In particular the leakage into the environment of the chlorine gas prepared by electrolysis must absolutely be prevented for environmental and safety reasons. The present invention has solved the problem of leakage of process liquids and gases in a way which essentially differs from the method disclosed by the aforesaid German Offenlegungsschrift, namely by providing a liquid jacket between the encasing and the outside of the cell frames. Thus the end plates can provide a mechanical fixation without using draw rods, which cause leakage, which makes the present construction essentially different from the construction known from German Offenlegungsschrift No. 36 03 254.

The device for carrying out such an electrolytic process is preferably built up of series-connected electrolytic cells in such a manner that the cathode space and the anode space are arranged in alternate relationship, which is necessary due to the fact that a bipolar electrode is used.

The cell element which is used in the electrolytic cell is characterized in that the connection between the cathode space and the catholyte space comprises two openings, one opening of which is present in the underside for supplying catholyte and one opening is present in the upper side for discharging hydrogen gas-containing catholyte. Such a construction ensures that the hydrogen gas which is produced at the cathode during the electrolysis can exit the cathode space via the opening present on the upper side. The hydrogen gas which is thus transported from the cathode space to the catholyte space, which hydrogen gas accumulates in the space present above the surface of the catholyte liquid, ensures that "fresh" catholyte is drawn into the cathode space via an opening present in the underside. In the cathode space the fresh catholyte material is subsequently converted into hydrogen gas, which gas exits the cathode space via the opening present in the upper side. The use of two openings ensures that there will be a continuous supply of fresh starting material and a continuous discharge of reaction products.

The other cell element which is used in the device for carrying out the electrolysis as described above is characterized in that the connection between the anode space and the anolyte space comprises two openings, one opening of which is present in the underside for supplying anolyte, and one opening is present in the upper side for discharging chlorine gas-containing anolyte. In the anode space the chlorine gas thus formed can exit the anode space via the opening present in the upper side. The chlorine gas thus transported from the anode space to the anolyte space will accumulate above the surface of the anolyte liquid in the anolyte space. The opening present in the underside ensures that "fresh" anolyte is transported from the anolyte space to the anode space, thus ensuring that there will be a continuous supply of fresh starting material via the opening in the underside and a continuous discharge of reaction products via the opening on the upper side. Such a process is also referred to as a bubble pump.

Such cell elements are preferably configured in such a manner that the volume of the space for discharging the gas being produced is larger than the volume of the space adjacent to the space that houses the bipolar electrode. Such geometry makes it possible to use a small amount of liquid in the electrolytic cell in order to keep the two openings for supplying starting material and discharging reaction products below the liquid level, as described before. It should be apparent that the transport process thus described (the "bubble pump"), which takes place in the anolyte space as well as in the catholyte space, can only be carried out if both openings are located below the liquid level.

It is furthermore preferred to build up the cell element as one unit, so that dimensional stability is ensured. This will prevent possible stresses from leading to leakage, which is one of the objectives of the present invention. In addition, such cell elements can be produced in a simple manner with great dimensional precision. It is in particular preferred for the cell element to have a rectangular geometry, whereby the part that constitutes the anolyte space and the part that constitutes the catholyte space have a P-shaped structure, wherein the P-shaped structures are positioned within the cell element, and wherein said structures are separated from each other by an intermediate member and by the space into which the bipolar electrode is to be placed. Thus the desired bell pump function can be effected by using a small amount of liquid in the anolyte space and in the catholyte space.

The device according to the present invention is furthermore characterized in that the electrolytic cells are pressed together under a prestressing force, whereby the outer shell is indirectly connected to the electrically series-connected electrolytic cells in a fluid-tight manner by being glued, bolted or welded thereto. By first pressing together the electrolytic cells and then welding or glueing the enveloping or surrounding water jacket to the two end plates under a pre-stressing force, a proper water-tightness of the jacket is ensured. Moreover, a proper sealing action between the individual cell elements is ensured with such a construction.

The cell element which is used in the device for carrying out an electrolytic process according to the present invention is furthermore provided with a recess, into wich the bipolar electrode can be placed, which recess is provided with ridges all round. The use of ridges ensures that the bipolar electrode is properly sealed in the recess of the cell element, thus preventing leakage of the liquid that is present in the cathode space into the anode space, and vice versa. Preferably such ridges are also present on the cell element, in order to ensure that the diaphragm is properly fixed and sealed in the cell element.

There is a great demand for the chlorine gas which is produced during electrolysis, in particular for purifying swimming water is swimming pools. The device according to the present invention may also be used, however, for preventing algal growth in cooling towers, for pasteurising milk or ice-cream, which may also take place by means of UV light, and generally in those places where germs and the like are to be killed.

From practice it has become apparent, however, that a faster and better oxidation and disinfection of for example water may take place if ClO₂ is added besides chlorine. A significant improvement achieved by using such a method of water treatment is the absence of the odour of the water thus treated, which people often consider objectionable. It is desirable, therefore, to provide a use for the chlorine gas developed in accordance with the present invention for the preparation of chlorine dioxide, after which chlorine dioxide can be added to water, for example.

The method for preparing chlorine dioxide by reacting chlorine gas with sodium chlorite is characterized in that the chlorine gas obtained by carrying out the above-described method is used. The formation of chlorine dioxide by using the chlorine gas obtained in accordance with the present method is not limited to sodium chlorite, but any other compound which is capable of forming chlorine dioxide by reacting with chlorine gas will be suitable. Examples of such compounds are potassium chlorite, calcium chlorite, in particular the alkaline-earth and alkali metal compounds of chlorite.

The preparation of chlorine dioxide by reacting sodium chlorite with chlorine gas is known per se from German Auslegeschrift No. 1 173 069. Said Auslegeschrift uses a gas bottle filled with chlorine gas as the chlorine gas source, whereas the present invention is limited to the special use of chlorine gas obtained by using the method according to the present invention, that is, the carrying out of an electrolytic process in the device according to the present invention. Such a special use of chlorine gas obtained by electrolysis of a chloride compound cannot be derived from said document.

The reaction is preferably carried out at a reduced pressure, which has a favourable effect on the reaction equilibrium. In addition, the chlorine produced in the present electrolysis device can thus be simply transported to the reactor for preparing chlorine dioxide. In a preferred embodiment the chlorine gas prepared in accordance with the present method is mixed with an inert carrier gas prior to being reacted with sodium chlorite, as a result of which sufficiently high gas velocities can be achieved. In a special embodiment it is preferred to mix the inert carrier gas with the chlorine gas prepared in accordance with the present method in the anolyte space of the present device already. It is also possible, however, to mix the chlorine gas with the inert carrier gas after it has exited the present electrolysis device. It is possible to use air as the inert carrier gas, but also any other inert carrier gas, such as argon or helium, is suitable. The sodium chlorite is present in the reactor in the form of a solution, and in order to increase the contact between the chlorine gas prepared in accordance with the present method and said sodium chlorite the reactor is provided with packing material, for example Rasschig rings.

In practice it is preferred to couple the present device for carrying out the electrolytic process to the reactor for preparing chlorine dioxide, as a result of which a compact installation which is easy to handle is obtained. In addition, such an installation may be provided with a control valve, as a result of which not only chlorine dioxide, but also chlorine gas is supplied to the medium to be disinfected. Experiments have shown that the combination of chlorine gas and ClO₂ has a favourable effect on the oxidation of for example swimming pool water.

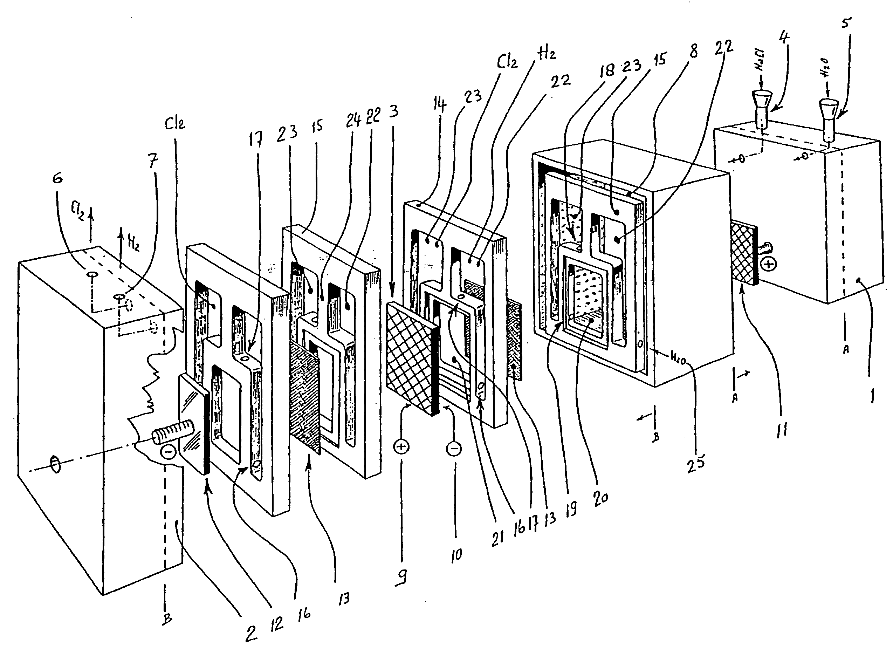

The invention will be explained in more detail hereafter with reference to the following description, wherein reference is made to the appended drawing.

The figure shows a device according to the present invention, which consists of several electrolytic cells comprising bipolar electrodes, wherein the device is shown in sectional view.

The figure is a sectional view of the device according to the present invention, which consists of an encasing comprising two end plates 1 and 2 provided with a positive pole 11 (anode) and a negative pole 12 (cathode), between which several electrolytic cells are present, with each cell consisting of a bipolar electrode 3 and a diaphragm 13. Bipolar electrode 3 may be considered to be a cathode 10 and an anode 9, which are both welded to a central plate (not shown) of bipolar electrode 3. The electrolytic cells are provided with an inlet 4 for brine and an inlet 5 for water, whereby brine is converted into chorine gas in the device thus shown, which chlorine gas is discharged via pipe 6. The hydrogen gas produced in the device is discharged via pipe 7. The brine enters anolyte space 23 of cell element 15. The anolyte space is filled with the brine solution via the opening 19 present in the underside of cell element 15. The formation of chlorine gas takes place on the anode 11 present in the anode space, after which the chlorine gas thus formed exits anode space 20 via the opening 18 present in the upper side of cell element 15. In the anolyt space 23 the liquid level of the brine solution has been selected such that opening 18 as well as opening 19 are located below the brine surface. The chlorine gas that is produced will accumulate in the anolyte space above the liquid level of the brine solution. Then a continuous supply of the starting material, brine solution, into anode space 20 will take place via the opening 19 present in the underside, and chlorine gas being produced will be discharged via opening 18. Anode space 20 is separated from cathode space 21 by means of diaphragm 13. Present in cathode space 21 is the water from inlet 5. The water will be converted into hydrogen gas on cathode 10, whereby the hydrogen gas will exit cathode space 21 via the opening 17 present on the upper side of cell element 14. The hydrogen that is produced accumulates in catholyte space 22 above the surface of the water present therein. A continuous supply of "fresh" water from catholyte space 22 to cathode space 21 takes place via the opening 16 present in the underside of cell element 14. The liquid level in catholyte space 22 is adjusted such that opening 17 as well as opening 16 will be located below the liquid surface. It is apparent that the hydrogen gas present in catholyte space 22 cannot come into contact with the chlorine gas present in anolyte space 23, due to the presence of intermediate member 24 in cell elements 14, 15. As can be seen in the figure, the geometry of cell element 14, 15 is such that both the catholyte space 22 and the anolyte space 23 have a P-shaped structure, whereby the P-shaped structure is determined by the space into which bipolar electrode 3 is to be placed and by intermediate member 24. From the figure it is apparent that cell elements 14, 15 are placed in alternate relationship in the electrolytic cell. The reason for this is that in cell element 14, in which openings 16 and 17 are present, the hydrogen gas is formed on cathode 12, whilst cell element 15, in which cell element chlorine gas is formed, is provided with openings 18, 19. The liquid jacket between encasing 25 and cell elements 14, 15 is indicated by reference numeral 8. Any leakage of anolyte or catholyte between the cell elements 14, 15 will be caught in water jacket 8.

The chlorine gas formed in the present electrolysis device is discharged via pipe 6. The chlorine gas 6 thus discharged may subsequently be used for preparing chlorine dioxide by reacting the chlorine gas prepared in accordance with the present method with sodium chlorite or with a similar compound, which, when reacted with chlorine gas, produces the chlorine dioxide aimed at. Preferably the chlorine gas is mixed with an inert carrier gas, in particular air, prior to being reacted with sodium chlorite. Such a reaction between sodium chlorite and chlorine gas is preferably carried out at. a reduced pressure, which has an advantageous effect on the reaction equilibrium. In order to augment the contact between the liquid sodium chlorite and the gaseous chlorine gas, the reactor in which the preparation of chlorine dioxide is carried out is provided with a packing elements.

## Claims

1. A device for carrying out the electrolysis of a chloride, wherein several electrolytic cells are connected in series electrically, which cells consist of a cell element, a bipolar electrode and a diaphragm or a semi-permeable membrane, wherein said cells are surrounded by an encasing comprising two end plates, and wherein a liquid jacket is present between the encasing and the outside of the cell frames, which jacket is provided with an inlet and an outlet for said liquid, **characterized in that** the cathode space is in direct communication with the catholyte space, which catholyte space also functions as an outlet for hydrogen gas, and that the anode space is in direct communication with the anolyte space, which anolyte space functions as an outlet for chlorine gas, whereby there is no communication between the catholyte space and the anolyte space.

2. A device according to claim 1, **characterized in that** said electrolytic cells are connected in series in such a manner that the cathode space and the anode space are arranged in alternating relationship.

3. A device according to claim 1 - 2, **characterized in that** the electrolytic cells are pressed together under a prestressing force, whereby the outer shell is connected to the two end plates by being glued, bolted or welded thereto.

4. A cell element according to claim 1, **characterized in that** the connection between the cathode space and the catholyte space comprises two openings, one opening of which is present in the underside for supplying catholyte, and one opening is present in the upper side for discharging hydrogen gas-containing catholyte.

5. A cell element according to claim 1, **characterized in that** the connection between the anode space and the anolyte space comprises two openings, of which one opening is present in the underside for supplying anolyte, and one opening is present in the upper side for discharging chlorine gas-containing anolyte.

6. A cell element according to claims 4 - 5, **characterized in that** the volume of the space for discharging the gas being produced is larger than the volume of the space adjacent to the space that houses the bipolar electrode.

7. A cell element according to claims 4 - 6, **characterized in that** said cell element provided with a recess, into wich the bipolar electrode can be placed, which recess is provided with ridges all round.

8. A cell element according to claims 4 - 7, **characterized in that** both the anolyte space and the catholyte space have a P-shaped geometry, which P-shaped geometry is determined by an intermediate member, which is connected to the space into which said bipolar electrode is to be placed.

9. A method for carrying out an electrolytic process in an electrolysis device, **characterized in that** said electrolytic process is carried out in the device according to claims 1 - 3.

10. A method according to claim 9, **characterized in that** the liquid level of the anolyte in said anolyte space is adjusted such that the chorine gas formed on the anode is discharged in the form of bubbles by the anolyte liquid.

11. A method according to claim 9, **characterized in that** the liquid level of the catholyte in said catholyte space is adjusted such that the hydrogen gas formed on the cathode is discharged in the form of bubbles by the catholyte liquid.

12. Use of the chlorine gas obtained in accordance with the method defined in claims 9 - 11 for preparing chlorine dioxide.

13. Use according to claim 12, **characterized in that** the chlorine gas obtained in accordance with the method defined in claims 9 - 11 is reacted with sodium chlorite.

14. Use according to claims 12 - 13, **characterized in that** the reaction is carried out at a reduced pressure.

15. Use according to claims 12 - 14, **characterized in that** said chlorine gas is mixed with an inert carrier gas prior to being reacted with sodium chlorite.

16. Use according to claim 15, **characterized in that** said inert carrier gas is mixed with said chlorine gas in the anolyte space of the device according to claims 1 - 3.

17. Use according to claims 15 - 16, **characterized in that** air is used.

18. A reactor for using chlorine gas obtained in accordance with the method defined in claims 9 - 11 for the preparation of chlorine dioxide, **characterized in that** said reactor is provided with packing elements.

19. Installation for preparing chlorine dioxide by using chlorine gas obtained in accordance with the method defined in claims 9 - 11, **characterized in that** said installation comprises the device according to claims 1 - 3 and the reactor according to claim 18.

20. Installation according to claim 19, **characterized in that** said installation comprises a control valve for the delivery of both chlorine gas and chlorine dioxide.

## Patentansprüche

1. Vorrichtung zur Durchführung der Elektrolyse eines Chlorids, worin mehrere Elektrolysezellen elektrisch in Reihe geschaltet sind, wobei diese Zellen aus einem Zellenelement, einer zweipoligen Elektrode und einem Diaphragma oder einer semipermeablen Membran bestehen und von einem zwei Abschlussplatten umfassenden Gehäuse umgeben sind und zwischen dem Gehäuse und der Außenseite der Zellenrahmen ein Flüssigkeitsmantel vorhanden ist, der mit einem Einlass und einem Auslass für die Flüssigkeit versehen ist, **dadurch gekennzeichnet, dass** der Kathodenraum direkt mit dem Katholytenraum verbunden ist, der auch als Ausgang für gasförmigen Wasserstoff dient, und der Anodenraum direkt mit dem Anolytenraum verbunden ist, der als Ausgang für Chlorgas dient, wodurch keine Verbindung zwischen Katholytenraum und Anolytenraum besteht.

2. Vorrichtung nach Anspruch 1, **dadurch gekennzeichnet, dass** die Elektrolysezellen derart in Reihe geschaltet sind, dass die Kathodenräume und Anodenräume abwechselnd angeordnet sind.

3. Vorrichtung nach den Ansprüchen 1 und 2, **dadurch gekennzeichnet, dass** die Elektrolysezellen von einer Vorspannungskraft aneinander gepresst werden, wobei die Außenhülle durch Verleimen, Verschrauben oder Verschweißen mit den zwei Abschlussplatten verbunden wird.

4. Zellenelement nach Anspruch 1, **dadurch gekennzeichnet, dass** die Verbindung zwischen Kathodenraum und Katholytenraum zwei Öffnungen umfasst, wobei sich eine Öffnung in der Unterseite für die Zufuhr des Katholyten und eine Öffnung in der Oberseite für das Ablassen des gasförmigen Wasserstoff enthaltenden Katholyten befindet.

5. Zellenelement nach Anspruch 1, **dadurch gekennzeichnet, dass** die Verbindung zwischen Anodenraum und Anolytenraum zwei Öffnungen umfasst, wobei sich eine Öffnung in der Unterseite für die Zufuhr des Anolyten und eine Öffnung in der Oberseite für das Ablassen des Chlorgas enthaltenden Anolyten befindet.

6. Zellenelement nach den Ansprüchen 4 und 5, **dadurch gekennzeichnet, dass** das Volumen des Raums für das Ableiten des sich entwickelnden Gases größer als das Volumen des an den Raum angrenzenden Raums ist, der die zweipolige Elektrode aufnimmt.

7. Zellenelement nach den Ansprüchen 4 bis 6, **dadurch gekennzeichnet, dass** das Zellenelement mit einer Aussparung versehen ist, in welcher die zweipolige Elektrode angeordnet werden kann, wobei die Aussparung ringsum mit Rippen versehen ist.

8. Zellenelement nach den Ansprüchen 4 bis 7, **dadurch gekennzeichnet, dass** die Geometrie sowohl des Anolytenraums als auch des Katholytenraums P-förmig ist, wobei die P-förmige Geometrie von einem Zwischenbauteil bestimmt wird, das mit dem Raum verbunden ist, in welchem die zweipolige Elektrode anzuordnen ist.

9. Verfahren zur Durchführung einer Elektrolyse in einer Elektrolysevorrichtung, **dadurch gekennzeichnet, dass** die Elektrolyse in der Vorrichtung nach den Ansprüchen 1 bis 3 durchgeführt wird.

10. Verfahren nach Anspruch 9, **dadurch gekennzeichnet, dass** der Flüssigkeitsstand des Anolyten im Anolytenraum derart eingestellt wird, dass das an der Anode gebildete Chlorgas in Bläschenform von der Anolytenflüssigkeit abgegeben wird.

11. Verfahren nach Anspruch 9, **dadurch gekennzeichnet, dass** der Flüssigkeitsstand des Katholyten im Katholytenraum derart eingestellt wird, dass der an der Kathode gebildete gasförmige Wasserstoff in Bläschenform von der Katholytenflüssigkeit abgegeben wird.

12. Verwendung des gemäß dem in den Ansprüchen 9 bis 11 definierten Verfahren erhaltenen Chlorgases für die Herstellung von Chlordioxid.

13. Verwendung nach Anspruch 12, **dadurch gekennzeichnet, dass** das gemäß dem in den Ansprüchen 9 bis 11 definierten Verfahren erhaltene Chlorgas mit Natriumchlorit umgesetzt wird.

14. Verwendung nach den Ansprüchen 12 und 13, **dadurch gekennzeichnet, dass** die Umsetzung unter Unterdruck durchgeführt wird.

15. Verwendung nach den Ansprüchen 12 bis 14, **dadurch gekennzeichnet, dass** das Chlorgas mit einem inerten Trägergas vermischt wird, bevor es mit Natriumchlorit umgesetzt wird.

16. Verwendung nach Anspruch 15, **dadurch gekennzeichnet, dass** das inerte Trägergas mit dem Chlorgas im Anolytenraum der Vorrichtung nach den Ansprüchen 1 bis 3 vermischt wird.

17. Verwendung nach den Ansprüchen 15 und 16, **dadurch gekennzeichnet, dass** Luft verwendet wird.

18. Reaktor für die Verwendung von gemäß dem in den Ansprüchen 9 bis 11 definierten Verfahren erhaltenem Chlorgas zur Herstellung von Chlordioxid, **dadurch gekennzeichnet, dass** der Reaktor mit Packungselementen versehen ist.

19. Anlage zur Herstellung von Chlordioxid unter Verwendung von gemäß dem in den Ansprüchen 9 bis 11 definierten Verfahren erhaltenem Chlorgas, **dadurch gekennzeichnet, dass** die Anlage die Vorrichtung nach den Ansprüchen 1 bis 3 und den Reaktor nach Anspruch 18 umfasst.

20. Anlage nach Anspruch 19, **dadurch gekennzeichnet, dass** die Anlage ein Regelventil für die Abgabe von sowohl Chlorgas als auch Chlordioxid enthält.

## Revendications

1. Dispositif pour exécuter l'électrolyse d'un chlorure, dans lequel plusieurs cellules électrolytique sont branchées électriquement en série, lesquelles cellules sont constituées par un élément de cellule, une électrode bipolaire et une diaphragme ou une membrane semi-perméable, et dans lequel lesdites cellules sont entourées par un boîtier comprenant deux plaques d'extrémité, et dans lequel une chemise de circulation de liquide est présente entre le boîtier et l'extérieur des cadres des cellules, laquelle cellule est pourvue d'une entrée et d'une sortie pour ledit liquide, **caractérisé en ce que** l'espace cathodique est en communication directe avec l'espace pour le catholyte, lequel espace pour le catholyte fonctionne également en tant que sortie pour le gaz d'hydrogène, et que l'espace anodique est en communication directe avec l'espace pour l'anolyte, lequel espace pour l'anolyte agit en tant que sortie pour le gaz chlore, ce qui a pour effet qu'il n'existe aucune communication entre l'espace pour le catholyte et l'espace pour l'anolyte.

2. Dispositif selon la revendication 1, **caractérisé en ce que** lesdites cellules électrolytiques sont branchées en série de telle sorte que l'espace cathodique et l'espace anodique sont disposés d'une manière alternée.

3. Dispositif selon la revendication 1-2, **caractérisé en ce que** les cellules sont serrées conjointement sous l'effet d'une force de précontrainte, la coque extérieure étant raccordée à deux plaques d'extrémité par collage, boulonnage ou soudage à ces plaques.

4. Elément de cellule selon la revendication 1, **caractérisé en ce que** le raccordement entre l'espace cathodique et l'espace pour le catholyte comporte deux ouvertures, une ouverture étant présente dans la face inférieure pour l'amenée du catholyte et une ouverture étant présente dans la face supérieure pour l'évacuation du catholyte contenant le gaz d'hydrogène.

5. Elément de cellule selon la revendication 1, **caractérisé en ce que** le raccordement entre l'espace anodique et l'espace pour l'anolyte comprend deux ouvertures, une ouverture étant présente dans la face inférieure pour l'amenée de l'anolyte et une ouverture étant présente dans la face supérieure pour l'évacuation de l'anolyte contenant du gaz chlore.

6. Elément de cellule selon les revendications 4-5, **caractérisé en ce que** le volume de l'espace pour évacuer le gaz produit est supérieur au volume de l'espace adjacent à l'espace qui loge l'électrode bipolaire.

7. Elément de cellule selon les revendications 4-6, **caractérisé en ce que** ledit élément de cellule est pourvu d'un renfoncement dans lequel l'électrode bipolaire peut être disposée, lequel renfoncement est pourvu de nervures sur tout son pourtour.

8. Elément de cellule selon les revendications 4-7, **caractérisé en ce qu'**à la fois l'espace pour l'anolyte et l'espace pour le catholyte possèdent une géométrie en forme de P, laquelle géométrie en forme de P est déterminée par un élément intermédiaire, qui est raccordé à l'espace dans lequel ladite électrode bipolaire doit être placée.

9. Procédé pour exécuter un processus électrolytique dans un dispositif d'électrolyse, **caractérisé en ce que** le processus électrolytique est exécuté dans le dispositif conformément aux revendications 1-3.

10. Procédé selon la revendication 9, **caractérisé en ce que** le niveau du liquide dans l'anolyte dans ledit espace pour l'anolyte est réglé de telle sorte que le gaz chlore formé sur l'anode est évacué sous la forme de bulles dans le liquide formant l'anolyte.

11. Procédé selon la revendication 9, **caractérisé en ce que** le niveau du liquide du catholyte dans ledit espace pour le catholyte est réglé de telle sorte que le gaz d'hydrogène formé sur la cathode est évacué sous la forme de bulles dans le liquide formé par le catholyte.

12. Utilisation du gaz chlore obtenu selon le procédé défini dans les revendications 9-11 pour préparer du dioxyde de chlore.

13. Utilisation selon la revendication 12, **caractérisée en ce que** le gaz chlore obtenu conformément au procédé défini dans les revendications 9-11 réagit avec du chlorite de sodium.

14. Utilisation selon les revendications 12-13, **caractérisée en ce que** la réaction est exécutée à une pression réduite.

15. Utilisation selon les revendications 12-14, **caractérisée en ce que** ledit gaz chlore est mélangé à un gaz de support inerte avant de réagir avec le chlorite de sodium.

16. Utilisation selon la revendication 15, **caractérisée en ce que** ledit gaz de support inerte est mélangé audit gaz chlore dans l'espace pour l'anolyte du dispositif selon les revendications 1-3.

17. Utilisation selon les revendications 15-16, **caractérisée en ce qu'**on utilise de l'air.

18. Réacteur pour utiliser le gaz chlore obtenu conformément au procédé défini dans les revendications 9-11 pour la préparation de dioxyde de chlore, **caractérisé en ce que** ledit réacteur est pourvu d'éléments de garnissage.

19. Installation pour préparer du dioxyde de chlore en utilisant du gaz chlore obtenu selon le procédé défini dans les revendications 9-11, **caractérisée en ce que** ladite installation comprend le dispositif selon les revendications 1-3 et le réacteur selon la revendication 18.

20. Installation selon la revendication 19, **caractérisée en ce que** ladite installation comprend une vanne de commande pour la délivrance à la fois du gaz chlore et du dioxyde de chlore.
